# EUROPEAN PATENT APPLICATION

(11) **EP 4 748 539 A1**
(43) Date of publication of application: **27.05.2026**
(21) Application number: 24845946.3
(22) Date of filing: 19.07.2024
(51) Int. Cl.: B25J 11/00, B25J 13/08, B25J 5/00, B25J 9/16, B25J 13/00, B25J 19/02, B66B 1/34, B60L 53/30, B64F 1/35, B64F 1/228

(54) **MOBILITY CHARGING ROBOT, CHARGING SYSTEM, AND CONTROL METHOD THEREOF**

(30) Priority: 21.07.2023 KR 20230095391; 07.05.2024 KR 20240059763
(71) Applicant: Hyundai Elevator Co., Ltd., Chungju-si, Chungcheongbuk-do (KR)
(72) Inventor: KIM, Hyun Goo, Chungju-si Chungcheongbuk-do 27329 (KR); SONG, Joon Hyun, Chungju-si Chungcheongbuk-do 27329 (KR)
(74) Representative: Baldus, Oliver
(86) International application number: PCT/KR2024/010442
(87) International publication number: WO 2025/023644

(57) **Abstract**

A mobility charging robot is disclosed. The mobility charging robot includes: a gripping manipulator configured to couple a charging plug of a charger dispenser to a charging port of a mobility vehicle; a mobile base comprising a main body coupled to the gripping manipulator and configured to move the main body to a charging area; and a sensing unit configured to identify a location of the mobility vehicle.

## Description

### [Technical Field]

The present invention relates to a mobility charging robot, a charging system, and a method of controlling the same.

### [Background Art]

There is growing demand for reduction of exhaust emissions to address global warming. Development of new technologies and innovations in the transportation sector are required to reduce emissions from ground transportation, which accounts for about 16% of carbon dioxide emissions.

Urban air mobility (UAM) is currently emerging as an alternative to ground transportation, enabling rapid transportation of passengers and cargo by air within urban centers.

It is expected that urban air mobility will reduce congestion and relieve environmental problems in urban centers due to use of electricity, and the market for urban air mobility is growing rapidly.

A vertical takeoff and landing site (vertiport) may include a takeoff/landing area where urban air mobility aircraft can take off or land, and a hangar where the urban air mobility aircraft can be parked or charged.

One of key performance indicators for vertiports, crucial components of urban air mobility infrastructure, is the number of possible takeoffs and landings per minute. Since the number of possible takeoffs and landings per minute can affect the number of passengers carried, operating costs, and ground traffic congestion, improvement in the number of possible takeoffs and landings per minute is very important.

To improve the number of possible takeoffs and landings per minute, it is important to provide high-capacity fast charging for urban air mobility aircraft. For example, charging of the urban air mobility aircraft may be performed with a megawatt charging system (MCS) for high-capacity fast charging. However, such high-capacity fast charging systems are difficult to handle manually due to use of heavy charging cables and charging plugs and pose inherent safety risks due to use of high voltage.

In addition, due to the structural characteristics of a vertiport, air mobility aircraft can be parked on each floor of a hangar of the vertiport. However, deploying individual charging systems on each floor poses significant problems, including diminished spatial utilization and increased costs.

Moreover, despite ongoing development of diverse electric-powered mobility solutions such as EVs, there remains a problem in that high voltage charging of a plurality of parked vehicles is difficult.

### [Disclosure]

### [Technical Problem]

It is one aspect of the present invention to provide a mobility charging robot that can provide high-capacity fast charging using an articulated robotic structure.

It is another aspect of the present invention to provide a charging system that enables movement of a mobility charging robot between different floors of a hangar of a vertiport and charging operations at each floor by controlling an elevator in association with operation of the mobility charging robot, and a method of controlling the same.

It is a further aspect of the present invention to provide a charging system control method that controls a charging system using flight information of a vertiport and charging-related information of air mobility vehicles.

It is yet another aspect of the present invention to provide a mobility charging robot that can safely perform high-capacity fast charging for electric vehicles parked in a parking tower.

### [Technical Solution]

In accordance with one aspect of the present invention, a mobility charging robot includes: a gripping manipulator configured to couple a charging plug of a charger dispenser to a charging port of a mobility vehicle; a mobile base comprising a main body coupled to the gripping manipulator and configured to move the main body to a charging area; and a sensing unit configured to identify a location of the mobility vehicle.

The mobility charging robot may further include: a wireless charging robot communication module coupled to the main body, wherein the wireless charging robot communication module may transmit and receive movement information of the mobile base, elevator boarding-related information, and destination floor information to and from a wireless elevator communication module of an elevator module.

The gripping manipulator may include a positioning unit configured to identify locations of the charging plug of the charger dispenser and the charging port of the mobility vehicle.

In accordance with another aspect of the present invention, a mobility charging system includes: a mobility charging robot including a wireless charging robot communication module and configured to charge an air mobility vehicle parked at a vertiport; a charger dispenser disposed in a hangar of the vertiport and supplied with power for charging the air mobility vehicle; and an elevator module including a wireless elevator communication module and configured to move the mobility charging robot to each floor of the hangar of the vertiport, wherein the wireless charging robot communication module transmits and receives elevator boarding-related information and elevator operation-related information to and from the wireless elevator communication module.

The mobility charging system may further include an UAM charging management unit configured to control charging of the air mobility vehicle by controlling the mobility charging robot and the elevator module, wherein the UAM charging management unit includes a wireless charging management unit communication module configured to transmit and receive location information and charging-related information to and from the wireless charging robot communication module and the wireless elevator communication module.

The UAM charging management unit may include: a vertiport flight management unit configured to confirm and manage information about air mobility vehicles landing at or taking off from the vertiport according to flight schedules to manage charging of the air mobility vehicle; an air mobility charging management unit configured to check a state of charge of air mobility vehicles parked in the hangar of the vertiport or to calculate estimated charging times for the air mobility vehicles parked in the hangar of the vertiport; and a vertiport hangar management unit configured to allocate a parking area within the hangar to the air mobility vehicle.

The mobility charging system may further include an air mobility transport unit configured to transport the air mobility vehicle to a takeoff area or a charging area in the hangar, wherein the air mobility transport unit includes a wireless transport unit communication module configured to transmit and receive location information and movement information to and from the wireless charging robot communication module.

The air mobility transport unit may further include: a loading unit configured to hold and support the air mobility vehicle; and a mobile base configured to transport the air mobility vehicle to the hangar or the takeoff area.

In accordance with a further aspect of the present invention, a method of controlling a charging system includes: a mobility charging robot dispatch step in which a mobility charging robot is dispatched to a corresponding charging area in a hangar to charge an air mobility vehicle; an elevator car interlocking and boarding step in which the mobility charging robot boards an elevator car to move to a different floor of the hangar; and a charging plug coupling step in which the mobility charging robot couples a charging plug of a charger dispenser to a charging port of the air mobility vehicle.

The mobility charging robot dispatch step may include identifying at least one of a location of an air mobility transport unit, an estimated time of arrival of the air mobility transport unit, and a flight schedule through a UAM charging management unit and dispatching the mobility charging robot to a charging area for an air mobility vehicle required to be charged preferentially.

The elevator car interlocking and boarding step may include allowing a mobility charging robot assigned to a priority charging target to board the elevator car first, among a plurality of mobility charging robots, using elevator car boarding information and charging-related information of the plurality of mobility charging robots.

The method may further include: a hangar charging location identification step in which a location in a multi-story hangar, at which a mobility vehicle to be charged is parked, is identified, prior to the mobility charging robot dispatch step; and an elevator module checking step in which whether the mobility charging robot is required to board the elevator car is determined and a current location of the elevator car is identified, prior to the elevator car interlocking and boarding step.

The method may further include: a hangar charging area relocation step in which the mobility charging robot moves to a charging area for the air mobility vehicle after alighting from the elevator car at a corresponding floor of the hangar, after the elevator car interlocking and boarding step.

### [Advantageous Effects]

Embodiments of the present invention provide a charging robot equipped with an articulated body, which can perform charging operations for air mobility vehicles more rapidly and accurately through a high-capacity fast charging system.

Embodiments of the present invention provide a charging system that ensures efficient implementation of charging operations, charging control, and charging management for air mobility vehicles parked at a vertiport.

Embodiments of the present invention provide a charging system that can improve the number of possible takeoffs and landings per minute, which is a key performance indicator for vertiports, through rapid deployment of charging robots.

Embodiments of the present invention provide a vertiport air mobility charging system with improved safety, accuracy, and reliability. In addition, embodiments of the present invention provide a charging system that can achieve high-capacity fast and automatic charging for electric vehicles parked in a parking tower.

### [Description of Drawings]

FIG. 1 is a schematic block diagram of a mobile air mobility charging robot and a charging system using the same, according to one embodiment of the present invention.
FIG. 2 is a schematic block diagram of a mobile air mobility charging robot according to one embodiment of the present invention.
FIG. 3 is a schematic view of one embodiment of the mobile air mobility charging robot of FIG. 2.
FIG. 4 is a schematic operation diagram of a charging system using a mobile air mobility charging robot according to one embodiment of the present invention.
FIG. 5 is a schematic flowchart illustrating a charging system control method according to one embodiment of the present invention.

### [Best Mode]

Hereinafter, embodiments of the present invention will be described in detail with reference to the accompanying drawings such that the present invention can be easily implemented by those skilled in the art. It should be understood that the present invention may be embodied in different ways and is not limited to the following embodiments.

In the drawings, portions irrelevant to the description will be omitted for clarity. Like components will be denoted by like reference numerals throughout the specification.

As used herein, the terms "includes", "comprises", "including" and/or "comprising" specify the presence of stated features, steps, operations, elements, and/or components, but do not preclude the presence or addition of one or more other features, steps, operations, elements, components, and/or groups.

It will be understood that the invention described in this disclosure is not intended to be limited to any particular embodiment, and includes various modifications, equivalents, and/or alternatives to the embodiments of this disclosure.

As used herein, the expression "configured to" may be used interchangeably with, for example, "suitable for", "having the capacity to", "designed to", "adapted to", "made to", or "capable of' depending on the context. The expression "configured (or set up) to" may not necessarily mean "specifically designed to" in a hardware sense. Instead, in a certain context, the expression "a device configured to" may mean that the device is "capable of" doing something in conjunction with other devices or components.

It will be understood that the related literature described in this disclosure is incorporated herein by reference in its entirety and that a person having ordinary skill in the art will be able to apply what is described in the related literature to the matters briefly described herein.

A vertiport, which is a specialized airport for takeoff and landing of urban air mobility (UAM) vehicles, includes a takeoff area, a landing area, and a hangar.

Specifically, the vertiport may be constructed on a rooftop of a building.

In addition, the hangar of the vertiport may be configured as a multi-story structure, and the takeoff area and the landing area may be selectively located on the rooftop of the building or on a rooftop of the hangar.

An urban air mobility (UAM) vehicle is moved between the landing area, the hangar, and the takeoff area.

To this end, the UAM vehicle may be moved between different floors of the hangar by a vertiport transport system.

The vertiport transport system may be provided with a plurality of lifts corresponding to the hangar. In addition, the vertiport transport system may be provided with two lifts corresponding to different sizes of UAM vehicles.

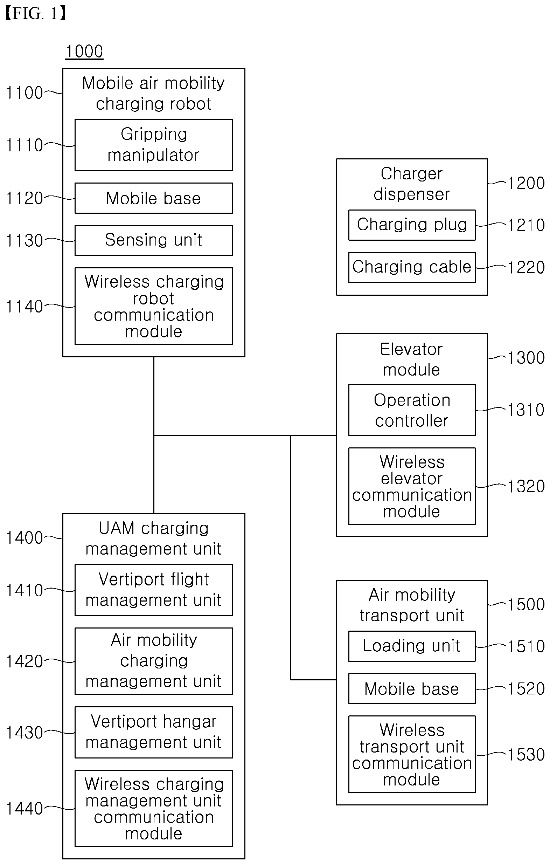

FIG. 1 is a schematic block diagram of a mobile air mobility charging robot and a charging system using the same, according to one embodiment of the present invention.

Referring to FIG. 1, a UAM charging system 1000 includes a mobile air mobility charging robot 1100, a charger dispenser 1200, an elevator module 1300, and a UAM charging management unit 1400.

The UAM charging system 1000 may further include an air mobility transport unit 1500.

More specifically, the mobile air mobility charging robot 1100 performs charging operations for UAM vehicles.

That is, the mobile air mobility charging robot 1100 is configured to charge air mobility vehicles parked at the vertiport.

In order to charge air mobility vehicles parked at the vertiport, the mobile air mobility charging robot 1100 may couple a charging plug 1210 of the charger dispenser 1200 to a charging port of a UAM vehicle parked on each floor of the hangar, while moving in the vertiport.

To this end, the mobile air mobility charging robot 1100 may include a gripping manipulator 1110, a mobile base 1120, a sensing unit 1130, and a wireless charging robot communication module 1140.

The gripping manipulator 1110 withdraws the charging plug 1210 from the charger dispenser 1200 and couples the charging plug 1210 to the charging port of a UAM vehicle.

The mobile base 1120 moves the mobile air mobility charging robot 1100 to a charging area of the vertiport in which the UAM vehicle is parked.

The sensing unit 1130 enables more effective implementation of movement of the mobile base 1120.

The sensing unit 1130 identifies a location of the UAM vehicle and may include a camera module or a proximity sensor.

The sensing unit 1130 may further include a laser scanner sensor. The laser scanner sensor detects obstacles and maps a travel route of the mobile air mobility charging robot 1100.

In addition, the sensing unit 1130 may further include a LiDAR sensor for autonomous navigation.

The wireless charging robot communication module 1140 transmits and receives movement information and charging-related information in real time to and from the elevator module 1300, the UAM charging management unit 1400, and the air mobility transport unit 1500.

In this way, the mobile air mobility charging robot 1100 can identify a location of an air mobility vehicle within the vertiport or confirm movement information of the air mobility vehicle and can charge the air mobility vehicle under the control of the UAM charging management unit 1400.

The charger dispenser 1200 supplies power to the UAM vehicle.

The charger dispenser 1200 may include a charging plug 1210 and a charging cable 1220.

The charging plug 1210 is coupled to the charging cable 1220. The charging plug 1210 may be coupled to the charging port of the UAM vehicle by the gripping manipulator 1110.

The charger dispenser 1200 may be disposed on each floor of the hangar of the vertiport.

The elevator module 1300 moves the mobile air mobility charging robot 1100 to each floor of a multi-story hangar of the vertiport.

That is, the elevator module 1300 may be operated corresponding to the multi-story hangar of the vertiport.

The elevator module 1300 may include an operation controller 1310 and a wireless elevator communication module 1320. The operation controller 1310 controls operation of an elevator in consideration of boarding of the mobile air mobility charging robot 1100.

The wireless elevator communication module 1320 of the elevator module 1300 may transmit and receive elevator boarding information and elevator operation-related information in real time to and from the wireless charging robot communication module 1140 and a wireless charging management unit communication module 1440.

For example, the mobile air mobility charging robot 1100 may board the elevator to charge an air mobility vehicle parked on a different floor of the vertiport.

Here, the mobile air mobility charging robot 1100 may provide a call signal and destination floor information to the elevator module 1300.

In addition, the mobile air mobility charging robot 1100 may provide information about an estimated time of arrival at an elevator hall to the elevator module 1300.

The UAM charging management unit 1400 controls operation of the mobile air mobility charging robot 1100, the elevator module 1300, and the air mobility transport unit 1500.

To this end, the UAM charging management unit 1400 includes a vertiport flight management unit 1410, an air mobility charging management unit 1420, a vertiport hangar management unit 1430, and a wireless charging management unit communication module 1440.

The vertiport flight management unit 1410 confirms and manages information about air mobility vehicles landing at or taking off from the vertiport according to flight schedules.

The air mobility charging management unit 1420 checks a state of charge (SoC) of air mobility vehicles parked in the hangar of the vertiport or calculates estimated charging times for the air mobility vehicles for charging management and controls charging operations based on the information.

That is, the air mobility charging management unit 1420 performs prioritized charging for different air mobility vehicles based on flight information, taking into account limited charging time and resources available within the vertiport.

The vertiport hangar management unit 1430 may allocate a hangar parking area to each air mobility vehicle based on flight information and charging information to ensure more efficient charging operations for the air mobility vehicles.

For example, when a charging operation must be performed with minimal charging time due to an imminent takeoff, the vertiport hangar management unit 1430 dispatches a mobile air mobility charging robot 1100 and the air mobility transport unit 1500 to a charging area which is adjacent to the takeoff area and allows rapid deployment of the mobile air mobility charging robot 1100.

The wireless charging management unit communication module 1440 transmits and receives location information, transport information, and charging-related information to and from the mobile air mobility charging robot 1100, the elevator module 1300, and the air mobility transport unit 1500.

The air mobility charging management unit 1420 may also control power of a charger.

That is, the air mobility charging management unit 1420 may selectively provide an output power of dispensers of the charger for ultra-fast charging.

For example, when the charger consists of a 3 MW power converter and three sets of dispensers, the air mobility charging management unit 1420 may set a first dispenser to an output power of 2 MW, a second dispenser to an output power of 1 MW, and a third dispenser to an idle mode, instead of setting every dispenser to an output power of 1 MW.

Accordingly, the air mobility charging management unit 1420 can implement more efficient battery charging.

The air mobility transport unit 1500 transports an air mobility vehicle to the hangar or a charging area.

To this end, the air mobility transport unit 1500 may be implemented by an air mobility parking robot.

The air mobility transport unit 1500 may include a loading unit 1510, a mobile base 1520, and a wireless transport unit communication module 1530.

The loading unit 1510 holds and supports an air mobility vehicle.

The mobile base 1520 moves the air mobility transport unit 1500 to the hangar, the takeoff area, or the landing area of the vertiport.

The wireless transport unit communication module 1530 transmits and receives location information, movement information, and charging-related information to and from the mobile air mobility charging robot 1100 and the UAM charging management unit 1400.

In addition, the air mobility transport unit 1500 may be implemented by a parking robot that moves an air mobility vehicle to the landing area, the takeoff area, or the hangar of the vertiport.

As the UAM charging system 1000 according to this embodiment is configured as described above, the mobile air mobility charging robot 1100 may transmit and receive charging-related information to and from the air mobility transport unit 1500. The mobile air mobility charging robot 1100 may perform charging of an air mobility vehicle under the control of the UAM charging management unit 1400 while identifying a location of the air mobility vehicle.

The UAM charging system 1000 according to this embodiment may further include an elevator module 1300 configured to move the mobile air mobility charging robot 1100 to each floor of the hangar. The mobile air mobility charging robot 1100 may transmit and receive movement information, elevator boarding information, and destination floor information to and from the elevator module 1300. Accordingly, it is possible to reduce the time required for completing charging operations by reducing the time it takes for the mobile air mobility charging robot 1100 to move between floors of the hangar while streamlining a process of boarding or alighting from an elevator.

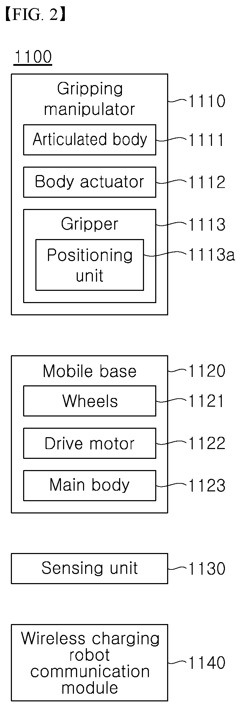

FIG. 2 is a schematic block diagram of a mobile air mobility charging robot according to one embodiment of the present invention.

Referring to FIG. 2, the mobile air mobility charging robot 1100 includes a gripping manipulator 1110, a mobile base 1120, a sensing unit 1130, and a wireless charging robot communication module 1140.

More specifically, the gripping manipulator 1110 withdraws a charging plug 1210 (see FIG. 1) from a charger dispenser 1200 (see FIG. 1) and couples the charging plug 1210 to a charging port of a UAM vehicle.

The gripping manipulator 1110 includes an articulated body 1111, a body actuator 1112, and a gripper 1113.

The articulated body 1111 includes a plurality of bodies connected to each other by joints to be movable relative to each other.

The body actuator 1112 implements a gripping operation by moving the articulated body 1111.

The gripper 1113 may be coupled to a distal end of the articulated body 1111.

The gripper 1113 couples the charging plug 1210 of the charger dispenser 1200 (see FIG. 1) to the charging port of the UAM vehicle.

The gripper 1113 may include a positioning unit 1113a.

The positioning unit 1113a identifies locations of the charging plug 1210 of the charger dispenser 1200 and the charging port of the air mobility vehicle.

The positioning unit 1113a may include a camera module or a proximity sensor.

The gripping manipulator 1110 may be mounted on the mobile base 1120.

The mobile base 1120 moves the mobile air mobility charging robot 1100.

The mobile base 1120 may include wheels 1121, a drive motor 1122, and a main body 1123.

The wheels 1121 and the drive motor 1122 are mounted on the main body 1123.

The gripping manipulator 1110 may be mounted on the main body 1123.

The technical features of the sensing unit 1130 and the wireless charging robot communication module 1140 have been described above and a detailed description thereof will be omitted herein.

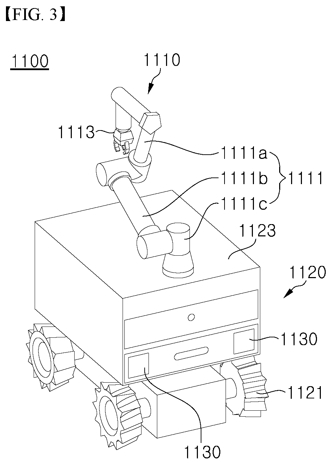

FIG. 3 is a schematic view of one embodiment of the mobile air mobility charging robot of FIG. 2.

Referring to FIG. 3, the mobile air mobility charging robot 1100 includes an articulated body 1111, a gripper 1113, a main body 1123, wheels 1121, and a sensing unit 1130.

The articulated body 1111 may include a plurality of bodies connected to each other by joints.

In the embodiment illustrated in FIG. 3, the articulated body 1111 includes a first body 1111a, a second body 1111b, and a third body 1111c.

The third body 1111c may be coupled to the main body 1123 and the gripper 1113 may be coupled to the first body 1111a.

The wheels 1121 and the sensing unit 1130 may be mounted on the main body 1123.

The sensing unit 1130 may be mounted on each of four sides of the main body 1123.

A camera or a vision sensor may be mounted on the gripper 1113.

The mobile air mobility charging robot 1100 according to this embodiment may be implemented by an autonomous mobile robot (AMR).

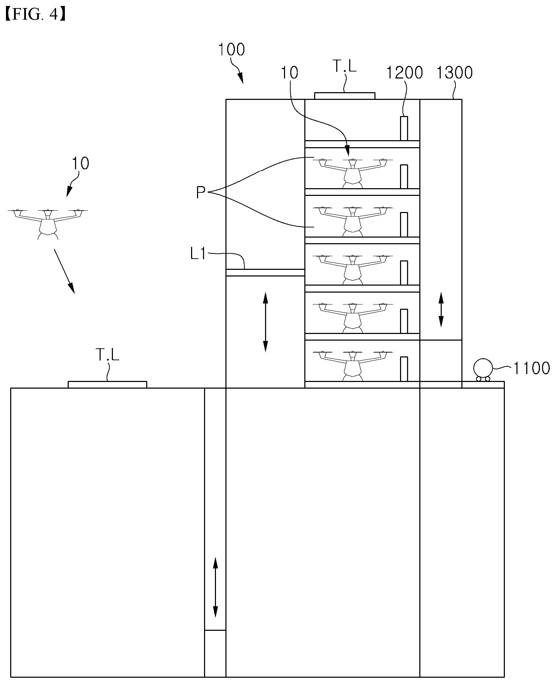

FIG. 4 is a schematic operation diagram of a charging system using a mobile air mobility charging robot according to one embodiment of the present invention.

A vertiport 100, to which a UAM charging system 1000 using a mobile air mobility charging robot is applied, may include a takeoff area T, a landing area L, and a multi-story hangar P.

The vertiport 100 may be constructed on a rooftop of a building.

In addition, a charging area on each floor of the hangar P may be provided with a charger dispenser 1200.

The vertiport 100 may be provided with a lift L1 configured to transport UAM vehicles to each floor of the hangar P.

A mobile air mobility charging robot 1100 charges the UAM vehicles 10 parked in the hangar P of the vertiport.

To this end, an air mobility charging management unit 1420 of a UAM charging management unit 1400 (see FIG. 1) provides the mobile air mobility charging robot 1100 with information about a location in the hangar, at which a UAM vehicle 10 to be charged is parked.

The mobile air mobility charging robot 1100 may board an elevator module 1300 to move to the corresponding location in the hangar P.

Here, the mobile air mobility charging robot 1100 may send a call signal and destination floor information to the elevator module 1300 through an Open API and may board the elevator module 1300 to move to a corresponding floor of the hangar, that is, a floor corresponding to the destination floor information.

The mobile air mobility charging robot 1100 may identify locations of the UAM vehicle 10 and the charger dispenser 1200 on the corresponding floor of the hangar through a sensing unit 1130 (see FIG. 1) and may couple a charging plug 1210 of the charger dispenser 1200 to a charging port of the UAM vehicle based on information acquired from a positioning unit 1113a mounted on a gripper 1113 (see FIG. 1).

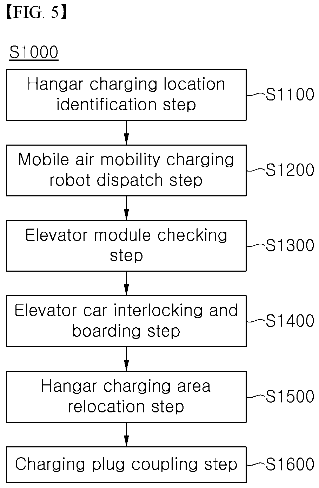

FIG. 5 is a schematic flowchart illustrating a charging system control method according to one embodiment of the present invention.

Referring to FIG. 5, the charging system control method S1000 includes: a hangar charging location identification step S1100; a mobile air mobility charging robot dispatch step S1200; an elevator module checking step S1300; an elevator car interlocking and boarding step S1400; a hangar charging area relocation step S1500; and a charging plug coupling step S1600.

More specifically, in hangar charging location identification step S1100, a location in a multi-story hangar, at which a UAM vehicle to be charged is parked, is identified.

Here, a vertiport hangar management unit 1430 may park the UAM vehicle in a specific area of the hangar in consideration of a flight schedule of a vertiport and charging capacity of the UAM vehicle.

Then, information about a charging area in which the UAM vehicle to be charged is located may be provided to a mobile air mobility charging robot.

In the mobile air mobility charging robot dispatch step S1200, the mobile air mobility charging robot 1100 is dispatched to the corresponding charging area of the hangar to charge the UAM vehicle.

Here, the mobile air mobility charging robot dispatch step S1200 may include dispatching, by the UAM charging management unit, the mobile air mobility charging robot to a charging area for an air mobility vehicle required to be charged preferentially, considering at least one of a current location of the air mobility transport unit, an estimated time of arrival of the air mobility transport unit, and a flight schedule.

In the elevator module checking step S1300, upon confirming that the mobile air mobility charging robot 1100 is not currently located on a floor of the hangar where the corresponding charging area is located, the state of an elevator module, including a location of an elevator car, is identified to dispatch the mobile air mobility charging robot to the corresponding floor of the hangar.

That is, the elevator module checking step S1300 includes determining whether the mobile air mobility charging robot 1100 is required to board the elevator car and identifying a current location of the elevator car.

In the elevator car interlocking and boarding step S1400, the elevator car is moved to a floor on which the mobile air mobility charging robot 1100 is located and the mobile air mobility charging robot 1100 boards the elevator car.

In addition, in the elevator car interlocking and boarding step S1400, the elevator car may be moved to the corresponding floor in consideration of the time it takes for the mobile air mobility charging robot 1100 to arrive at an elevator hall on the corresponding floor and the time it takes for the elevator car to arrive at the corresponding floor.

The mobile air mobility charging robot 1100 boards the elevator car to move to a destination floor of the hangar.

In the elevator car interlocking and boarding step S1400, a mobile air mobility charging robot 1100 assigned to a priority charging target may be allowed to board the elevator car first, among a plurality of mobile air mobility charging robots 1100 using elevator car boarding information and charging-related information of the plurality of mobile air mobility charging robots 1100.

In hangar charging area relocation step S1500, the mobile air mobility charging robot 1100 moves to the charging area for the UAM vehicle after alighting from the elevator car on the destination floor of the hangar.

In the charging plug coupling step S1600, the mobile air mobility charging robot 1100 couples a charging plug of a charger dispenser 1200 to a charging port of the air mobility vehicle.

Here, the charging plug coupling step S1600 may further include identifying locations of the charging plug and the charging port.

To this end, a positioning unit 1113a (see FIG. 2) mounted on a gripper 1113 (see FIG. 3) identifies the locations of the charging plug 1210 of the charger dispenser 1200 and the charging port of the air mobility vehicle 10.

Then, the gripper 1113 withdraws the charging plug 1210 from the charger dispenser 1200 and couples the charging plug 1210 to the charging port of the air mobility vehicle 10.

In addition, in the charging plug coupling step S1600, an air mobility charging management unit 1420 may control power of a charger.

That is, the air mobility charging management unit 1420 may selectively provide output power of a plurality of charger dispensers 1200 to ensure ultra-fast charging.

For example, when the charger consists of a 3 MW power converter and 3 sets of dispensers, the air mobility charging management unit 1420 may set a first dispenser to an output power of 2 MW, a second dispenser to an output power of 1 MW, and a third dispenser to an idle mode, instead of setting every dispenser to an output power of 1 MW.

Accordingly, the charging system according to the present invention can implement more efficient charging operations for a plurality of air mobility vehicles.

The air mobility charging robot, the charging system, and the method of controlling the same according to the present invention are equally applicable to electric vehicles parked in a multi-story parking tower corresponding to a vertiport.

That is, the charging robot can implement charging operations for electric vehicles parked on each floor of the parking tower in the same manner as described above.

While the preferred embodiments of the present invention have been described with reference to the drawings as above, it should be understood that the foregoing embodiments are provided for illustration only and are not to be in any way construed as limiting the present invention, and that various modifications, changes, alterations, and equivalent embodiments can be made by those skilled in the art without departing from the spirit and scope of the disclosure. For example, even when the invention described herein is performed in a different order than described herein and/or the components of the described systems, structures, devices, circuits, and the like are combined or assembled in a different form than described herein or are substituted or replaced by other components or equivalents thereto, suitable results can be achieved.

Therefore, other implementations, other embodiments, and equivalents to the appended claims fall within the scope of the claims.

## Claims

1. A mobility charging robot comprising:
a gripping manipulator configured to couple a charging plug of a charger dispenser to a charging port of a mobility vehicle;
a mobile base comprising a main body coupled to the gripping manipulator and configured to move the main body to a charging area; and
a sensing unit configured to identify a location of the mobility vehicle.

2. The mobility charging robot according to claim 1, further comprising:
a wireless charging robot communication module coupled to the main body,
wherein the wireless charging robot communication module transmits and receives movement information of the mobile base, elevator boarding-related information, and destination floor information to and from a wireless elevator communication module of an elevator module.

3. The mobility charging robot according to claim 1, wherein the gripping manipulator comprises a positioning unit configured to identify locations of the charging plug of the charger dispenser and the charging port of the mobility vehicle.

4. A mobility charging system comprising:
a mobility charging robot comprising a wireless charging robot communication module and configured to charge an air mobility vehicle parked at a vertiport;
a charger dispenser disposed in a hangar of the vertiport and supplied with power for charging the air mobility vehicle; and
an elevator module comprising a wireless elevator communication module and configured to move the mobility charging robot to each floor of the hangar of the vertiport,
wherein the wireless charging robot communication module transmits and receives elevator boarding-related information and elevator operation-related information to and from the wireless elevator communication module.

5. The mobility charging system according to claim 4, further comprising:
a UAM charging management unit configured to control charging of the air mobility vehicle by controlling the mobility charging robot and the elevator module, the UAM charging management unit comprising a wireless charging management unit communication module configured to transmit and receive location information and charging-related information to and from the wireless charging robot communication module and the wireless elevator communication module.

6. The mobility charging system according to claim 5, wherein the UAM charging management unit comprises:
a vertiport flight management unit configured to confirm and manage information about air mobility vehicles landing at or taking off from the vertiport according to flight schedules to manage charging of the air mobility vehicle;
an air mobility charging management unit configured to check a state of charge of air mobility vehicles parked in the hangar of the vertiport or to calculate estimated charging times for the air mobility vehicles parked in the hangar of the vertiport; and
and a vertiport hangar management unit configured to allocate a parking area within the hangar to the air mobility vehicle.

7. The mobility charging system according to claim 4, further comprising:
an air mobility transport unit configured to transport the air mobility vehicle to a takeoff area or a charging area in the hangar, the air mobility transport unit comprising a wireless transport unit communication module configured to transmit and receive location information and movement information to and from the wireless charging robot communication module.

8. The mobility charging system according to claim 7, wherein the air mobility transport unit further comprises a loading unit configured to hold and support the air mobility vehicle and a mobile base configured to transport the air mobility vehicle to the hangar or the takeoff area.

9. A method of controlling a charging system, comprising:
a mobility charging robot dispatch step in which a mobility charging robot is dispatched to a corresponding charging area in a hangar to charge an air mobility vehicle;
an elevator car interlocking and boarding step in which the mobility charging robot boards an elevator car to move to a different floor of the hangar; and
a charging plug coupling step in which the mobility charging robot couples a charging plug of a charger dispenser to a charging port of the air mobility vehicle.

10. The method according to claim 9, wherein the mobility charging robot dispatch step comprises identifying at least one of a location of an air mobility transport unit, an estimated time of arrival of the air mobility transport unit, and a flight schedule through a UAM charging management unit and dispatching the mobility charging robot to a charging area for an air mobility vehicle required to be charged preferentially.

11. The method according to claim 9, wherein the elevator car interlocking and boarding step comprises allowing a mobility charging robot assigned to a priority charging target to board the elevator car first, among a plurality of mobility charging robots, using elevator car boarding information and charging-related information of the plurality of mobility charging robots.

12. The method according to claim 9, further comprising:
a hangar charging location identification step in which a location in a multi-story hangar, at which a mobility vehicle to be charged is parked, is identified, prior to the mobility charging robot dispatch step; and
an elevator module checking step in which whether the mobility charging robot is required to board the elevator car is determined and a current location of the elevator car is identified, prior to the elevator car interlocking and boarding step.

13. The method according to claim 12, further comprising:
a hangar charging area relocation step in which the mobility charging robot moves to a charging area for the air mobility vehicle after alighting from the elevator car at a corresponding floor of the hangar, after the elevator car interlocking and boarding step.
